# EUROPEAN PATENT SPECIFICATION

(11) **EP 1 367 193 B1**
(45) Date of publication and mention of the grant of the patent: **09.07.2008**
(21) Application number: 03076412.0
(22) Date of filing: 09.05.2003
(51) Int. Cl.: E04F 13/16, E04F 13/08, C04B 41/52

(54) **Method for applying flake-like material to a surface for making a wall structure**
Verfahren zur Anbringung von flockigem Material auf eine Oberfläche zur Herstellung einer Wandstruktur
Procédé pour appliquer du matériau floconneux pour la fabrication d'une structure murale

(30) Priority: 29.05.2002 NL 1020711
(43) Date of publication of application: 03.12.2003
(73) Proprietor: Coldec Holding B.V., 8171 MB Vaassen (NL)
(72) Inventor: Bleize, Ronald Christiaan, 7315 BV Apeldoorn (NL)
(74) Representative: Dokter, Hendrik Daniel

(56) References cited:
- US-A- 3 493 418
- US-A- 5 403 884

## Description

The invention relates to a method for applying a layer of flake-like particles to a surface, for instance on a wall surface, comprising the steps of
(i) providing a quantity of flake-like particles in a dispensing device,
(ii) applying to the surface an adhesive layer of a liquid curing material, and
(iii) arranging the flake-like particles against the adhesive layer using the dispensing device, this before curing of the adhesive layer, in order to cause these particles to adhere to this layer.

Such a method is known in the building industry, and is applied for instance in the finishing of inside walls and walls in a building. According to the known method, dry paint flakes or pigment flakes, structure flakes, or also known as colour chips, in predetermined colour composition are sprayed or flung from a supply container against a wall for finishing by means of compressed air from a nozzle or using a splashing machine, the wall being provided beforehand for this purpose with a glue layer. On the wall is created a layer of structure flakes, which layer is very even, because the structure flakes adhere to the wall if and as long as glue is available on the surface. When structure flakes are supplied to a "saturated" part of the wall, these flakes will drop downward, and can be reused after collection. After applying a covering layer of structure flakes, this layer is successively dried and provided with a protective coating, for instance of a transparent water-borne varnish.

It is perceived as a drawback of the known method that the minimal period of time within which it can be performed is relatively long: between arranging of the particles in the adhesive layer and providing the arranged layer of particles with a protective coating quite a long period has to be taken into account to allow the adhesive layer to dry. A further drawback of the known method is that the degree of coverage of a wall, i.e. the percentage of a wall area which is covered by arranged flakes, is limited to an inherent upper limit of about 80%, because flakes which do not adhere adequately are wiped off a wall during the removal of excess flakes, as a consequence of which open patches occur. Another drawback of the known method is that it is not suitable, or at least less so, for subsequent arrangement of a layer of flake-like particles onto an insufficiently covered surface, or onto a surface which shows damage. A layer of flake-like material arranged according to the known method results in a finished surface having a non-smooth structure, which is sometimes perceived as a drawback. An inherent drawback of the known method, wherein flakes are arranged between an adhesive layer and a protective coating, are the material costs of this coating layer.

It is an object of the invention to provide a method for applying a layer of flake-like particles to a surface, in accordance with which a large area can be treated in a relatively short period of time, wherein a surface can be finished immediately after a layer of flake-like particles has been applied, i.e. without taking into account a period for curing of an adhesive layer.

It is a further object to provide a method according to which damage to a wall already covered with flakes can be made good in simple manner, and according to which it is possible to finish a surface such that it has a smooth structure.

It is another object to provide a method for applying flake-like particles to a surface at markedly lower material costs.

These objectives are achieved, and other advantages gained, with a method of the type described in the preamble, wherein according to the invention the adhesive layer to be applied according to the second step (ii) is of a material which at least after curing is transparent, and the third step (iii) is followed by a fourth step of (iv) pressing into the adhesive layer with a suitable first tool the flake-like particles arranged against this adhesive layer in the third step (iii), this prior to curing of the adhesive layer.

The method according to the invention provides the advantage over the known method that by pressing the flake-like particles into the adhesive layer during the fourth step (iv) it is possible to dispense with a further post-treatment in the form of applying a protective coating. A substantial cost-saving is realized by thus increasing the efficiency (it is after all no longer necessary to delay the finishing until the adhesive layer is cured). In addition, an inherent saving in material costs is realized by the absence of a coating layer. It is noted that the adhesive layer to be applied in accordance with the second step (ii) must be of a transparent material, at least after curing, although in non-cured state it may for instance have a milky appearance.

Another advantage is that the degree of coverage of a wall on which flakes are arranged according to the invented method is not limited to an inherent upper limit of about 80%, but has a substantially higher value, for instance 95%. A substantially higher degree of coverage provides the advantage that the final appearance of a surface on which a layer of flake-like particles has been arranged is less dependent on the colour and the quality of the original surface.

In one embodiment of a method according to the invention the adhesive layer to be applied according to the second step (ii) has a thickness of about 300 µm.

In one embodiment the material for the adhesive layer to be applied according to the second step (ii) has a density in the range of 1.04 g/cm³ to 1.07 g/cm³, preferably 1.05 g/cm³.

In another embodiment the adhesive layer to be applied in the second step (ii) contains a water-borne adhesive material, for instance an acrylate.

Pressing of the flake-like particles into the adhesive layer is carried out for instance using a roller.

It has been found that good results are obtained with a method according to the invention wherein the pressing of the flake-like particles into the adhesive layer is carried out for instance using a dry fleece roller.

In one embodiment the fourth step (iv) is followed in the method according to the invention by a fifth step of (v) smoothing out the adhesive layer, using a suitable second tool, prior to curing of the adhesive layer. According to this embodiment a finished surface with an exceptionally smooth structure is obtained.

### Comparative example 1 (prior art)

Under normal conditions (temperature 20°C, relative air humidity 65%) there is applied to a vertically placed wall part with an area of 1 m² an adhesive layer consisting of 200 ml of a water-borne polyvinyl acetate with a density of 1.3 g/cm³. Plastic structure flakes of a commercially obtainable type (FS-flakes, density 2.0 to 2.5 g/cm³, from Coldec, Apeldoorn) are blown into the wet adhesive layer using a commercially obtainable pneumatic dispensing system (the "Flaketech®" system, also from Coldec). After a drying time (intermediate step) the wall is brushed down. The quantity of the flakes after brushing down amounts to about 200 g, the degree of coverage amounts to about 80%. Finally, a varnish is applied of a water-borne acrylate (125 ml, density 1.05 g/cm³). The period of time involved in these processes amounts for

| | |
|---|---|
| - applying adhesive layer | to 3 minutes |
| - blowing on structure flakes | 3 |
| - drying time | 360 |
| - brushing down structure flakes | 1 |
| - applying varnish | 3 |
| - Total processing time | 370 minutes |

### Comparative example 2 (according to the invention)

Under normal conditions (temperature 20°C, relative air humidity 65%) there is applied to a vertically placed wall part with an area of 1 m² an adhesive layer with a thickness of 300 µm (corresponding to a quantity of 300 ml), consisting of a water-borne transparent acrylate with a density of 1.05 g/cm³. Plastic structure flakes of a commercially obtainable type (FS-flakes, density 2.0 to 2.5 g/cm³, from Coldec, Apeldoorn) are blown into the wet adhesive layer using a commercially obtainable pneumatic dispensing system (the "Flaketech®" system, also from Coldec). Immediately after being blown on, the structure flakes are rolled into the still wet adhesive layer using a dry fleece roller. The quantity of the flakes after rolling-in amounts to about 235 g, the degree of coverage amounts to about 95%.
The period of time involved in these processes amounts for

| | |
|---|---|
| - applying adhesive layer | to 3 minutes |
| - blowing on structure flakes | 3 |
| - rolling in structure flakes | 2 |
| - Total processing time | 8 minutes |

## Claims

1. Method for applying a layer of flake-like particles to a surface, for instance on a wall surface, comprising the steps of
(i) providing a quantity of flake-like particles in a dispensing device,
(ii) applying to the surface an adhesive layer of a liquid curing material, and
(iii) arranging the flake-like particles against the adhesive layer using the dispensing device, this before curing of the adhesive layer, to cause these particles to adhere to this layer, **characterized in that** the adhesive layer to be applied according to the second step (ii) is of a material which at least after curing is transparent, and the third step (iii) is followed by a fourth step of
(iv) pressing into the adhesive layer with a suitable first tool the flake-like particles arranged against this adhesive layer in the third step (iii), this prior to curing of the adhesive layer.

2. Method as claimed in claim 1, **characterized in that** the adhesive layer to be applied according to the second step (ii) has a thickness of about 300 µm.

3. Method as claimed in either of the claims 1-2, **characterized in that** the material for the adhesive layer to be applied according to the second step (ii) has a density in the range of 1.04 g/cm³ to 1.07 g/cm³.

4. Method as claimed in claim 3, **characterized in that** the material for the adhesive layer to be applied according to the second step (ii) has a density of 1.05 g/cm³.

5. Method as claimed in any of the claims 1-4, **characterized in that** the adhesive layer to be applied in the second step (ii) contains a water-borne adhesive material.

6. Method as claimed in claim 5, **characterized in that** the adhesive layer is an acrylate.

7. Method as claimed in any of the claims 1-6, **characterized in that** the pressing of the flake-like particles into the adhesive layer according to the fourth step (iv) is carried out using a roller.

8. Method as claimed in claim 7, **characterized in that** the pressing of the flake-like particles into the adhesive layer is carried out using a dry fleece roller.

9. Method as claimed in any of the claims 1-8, **characterized in that** the fourth step (iv) is followed by a fifth step of
(v) smoothing out the adhesive layer prior to curing of the adhesive layer using a suitable second tool.

## Patentansprüche

1. Mehrschichtspiegel (4) für Strahlung mit einer Wellenlänge im Wellenlängenbereich zwischen 0,1 nm und 30 nm, umfassend eine Stapelung von dünnen Filmen (9) die im Wesentlichen streuende Teilchen enthalten, die die Strahlung streuen, welche dünnen Filme (9) durch Trennschichten (10) mit einer Stärke in der Größenordnung der Wellenlänge der Strahlung getrennt sind, welche Trennschichten (10) im Wesentlichen nicht-streuende Teilchen enthalten, die die Strahlung nicht beziehungsweise in geringerem Ausmaß als die streuenden Teilchen streuen, wobei die Trennschichten (10) jeweils an wenigstens einer Seite von einer Zwischenschicht (12) aus einem mit dem Material der dünnen Filme (9) und dem Material der Trennschichten (10) mischfähigen Material bedeckt sind, wobei die nicht-streuenden Teilchen ausgewählt sind aus der Gruppe, die Kohlenstoff (C) und passiviertes Silizium (Si:H) umfasst, **dadurch gekennzeichnet, dass** das Material der Zwischenschicht (12) Silizium (Si) ist.

2. Mehrschichtspiegel (4) nach Anspruch 1, **dadurch gekennzeichnet, dass** streuende Teilchen ausgewählt sind aus den Gruppen der Übergangselemente aus der vierten, fünften und sechsten Periode des Periodensystems.

3. Mehrschichtspiegel (4) nach Anspruch 2, **dadurch gekennzeichnet, dass** die streuenden Teilchen ausgewählt sind aus den Übergangselementen Kobalt (Co), Nickel (Ni), Molybdän (Mo), Wolfram (W), Rhenium (Re) und Iridium (Ir).

4. Mehrschichtspiegel (4) nach Anspruch 3, **dadurch gekennzeichnet, dass** die streuende Teilchen Wolframteilchen und die nicht-streuenden Teilchen passivierte Siliziumteilchen (Si:H) sind.

5. Mehrschichtspiegel (4) nach Anspruch 3, **dadurch gekennzeichnet, dass** die streuenden Teilchen Nickelteilchen und die nicht-streuenden Teilchen Kohlenstoffteilchen sind.

6. Mehrschichtspiegel (4) nach einem der Ansprüche 1-5, **dadurch gekennzeichnet, dass** die Zwischenschicht (12) eine Stärke von etwa 0,3 nm hat.

7. Mehrschichtspiegel (4) nach einem der Ansprüche 1-6, **dadurch gekennzeichnet, dass** die Stapelung wenigstens 10 durch Trennschichten (10) getrennte Dünnfilmschichten (9) umfasst.

8. Mehrschichtspiegel (4) nach Anspruch 7, **dadurch gekennzeichnet, dass** die Stapelung wenigstens 100 durch Trennschichten (10) getrennte Dünnfilmschichten (9) umfasst.

9. Mehrschichtspiegel (4) nach Anspruch 8, **dadurch gekennzeichnet, dass** die Stapelung etwa 500 durch Trennschichten (10) getrennte Dünnfilmschichten (9) umfasst.

## Revendications

1. Miroir multicouche (4) pour un rayonnement avec une longueur d'onde comprise dans la gamme des longueurs d'onde s'étendant entre 0,1 nm et 30 nm, comprenant un empilement de films minces (9) contenant essentiellement des particules de dispersion qui diffusent le rayonnement, lesdits films minces (9) étant séparés par des couches de séparation (10) dont l'épaisseur est de l'ordre de grandeur de la longueur d'onde du rayonnement, lesdites couches de séparation (10) contenant essentiellement des particules de non dispersion qui ne diffusent pas le rayonnement, ou qui au moins diffusent le rayonnement dans une mesure moindre que les particules de dispersion, les couches de séparation (10) étant recouvertes sur au moins un côté dans chaque cas par une couche intermédiaire (12) constituée d'une matière qui peut être mélangée avec la matière dont les films minces (9) sont constitués et avec la matière dont les couches de séparations (10) sont constituées, les particules de non dispersion étant sélectionnées dans le groupe comprenant le carbone (C) et le silicium passivé (Si:H), **caractérisé en ce que** la matière dont la couche intermédiaire (12) est constituée est le silicium (Si).

2. Miroir multicouche (4) selon la revendication 1, **caractérisé en ce que** les particules de dispersion sont sélectionnées dans les groupes des éléments de transition dans les quatrième, cinquième et sixième périodes du système périodique des éléments.

3. Miroir multicouche (4) selon la revendication 2, **caractérisé en ce que** les particules de dispersion sont sélectionnées parmi les élément de transition suivants: le cobalt (Co), le nickel (Ni), le molybdène (Mo), le tungstène (W), le rhénium (Re) et l'iridium (Ir).

4. Miroir multicouche (4) selon la revendication 3, **caractérisé en ce que** les particules de dispersion sont des particules de tungstène, et les particules de non dispersion sont des particules de silicium passivé (Si:H).

5. Miroir multicouche (4) selon la revendication 3, **caractérisé en ce que** les particules de dispersion sont des particules de nickel, et les particules de non dispersion sont des particules de carbone.

6. Miroir multicouche (4) selon l'une quelconque des revendications 1 à 5, **caractérisé en ce que** la couche intermédiaire (12) présente une épaisseur d'environ 0,3 nm.

7. Miroir multicouche (4) selon l'une quelconque des revendications 1 à 6, **caractérisé en ce que** l'empilement comprend au moins 10 couches de film mince (9) séparées par des couches de séparation (10).

8. Miroir multicouche (4) selon la revendication 7, **caractérisé en ce que** l'empilement comprend au moins 100 couches de film mince (9) séparées par des couches de séparation (10).

9. Miroir multicouche (4) selon la revendication 8, **caractérisé en ce que** l'empilement comprend au moins environ 500 couches de film mince (9) séparées par des couches de séparation (10).
